# EUROPEAN PATENT APPLICATION

(11) **EP 4 250 214 A1**
(43) Date of publication of application: **27.09.2023**
(21) Application number: 23162862.9
(22) Date of filing: 20.03.2023
(51) Int. Cl.: G06Q 30/0201, G06Q 30/0283, G06Q 50/06

(54) **SYSTEMS AND METHODS OF DETERMINING DATA OF ENERGY UTILITIES**

(30) Priority: 23.03.2022 US 202217701791
(71) Applicant: Arcadia Power Inc., Washington, DC 20004 (US)
(72) Inventor: Tucker, John, Woodstock (US); Lopuch, Daniel, Albany (US)
(74) Representative: Cross, James Peter Archibald

(57) **Abstract**

Systems and methods may be provided to receive, at a server, a utility bill and interval data for a user of an energy utility, and store the received utility bill and interval data in a database system communicatively coupled to the server. The received utility bill may include a date range for the bill and a tariff. The received interval data may include data used by the energy utility for determining costs. A calculation engine of the server may determine a model bill based on the received utility bill and the interval data. The server may determine an accuracy of a utility bill issued by the energy utility to by determining whether the model bill matches the utility bill. The server may determine that the utility bill, the interval data, and the tariff are accurate when the model bill matches the utility bill based on the accuracy determination.

## Description

### BACKGROUND

Presently, energy utilities provide electricity or other forms of energy to customers. Information regarding energy usage by customers is recorded using an interval meter, which may be read by representatives of the energy utility or transmitted to the energy utility. The recorded energy usage, along with other information such as the rate or cost of the energy and applicable tariffs, may be used to generate an energy bill for a customer. Errors in billing can result from incorrect energy rates and/or tariffs being applied by the energy utility, and/or by inaccurate interval data.

### BRIEF SUMMARY

According to an implementation of the disclosed subject matter, a method may be provided to receive, at a server, a total billing amount for a utility bill for a user for an energy utility, a billing period including a start date and an end date for the utility bill, and a zip code of the user. The server may determine one or more eligible tariffs for the user based on the received zip code using a database system communicatively coupled to the server, and based on a customer class of the user. The server may generate one or more tariff options for each of the one or more eligible tariffs, where each combination of the one or more tariff options and the one or more eligible tariffs comprises a tariff scenario. A calculation engine of the server may determine a total cost for each of the tariff scenarios for the energy utility based on the start date and the end date of the billing period, and interval data of energy usage. The server may compare the received total billing amount with the total cost determined for each of the one or more tariff scenarios. When one of the determined total costs of the one or more tariff scenarios is within a predetermined range of the received total billing amount, the server may determine the tariff and tariff options of the tariff scenario associated with the one determined total cost. The determined tariff and tariff options of the tariff scenario for the user may be stored at the database system communicatively coupled to the server.

Additional features, advantages, and implementations of the disclosed subject matter may be set forth or apparent from consideration of the following detailed description, drawings, and claims. Moreover, it is to be understood that both the foregoing summary and the following detailed description are illustrative and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIG. 1 shows an example method of determining data accuracy of an energy utility, including accuracy of energy tariffs, according to an implementation of the disclosed subject matter.
FIGS. 2A-3 show optional additional operations of the example method of FIG. 1 according to implementations of the disclosed subject matter.
FIG. 4 shows a network arrangement of energy generating systems, servers, databases, and customer devices according to an implementation of the disclosed subject matter.
FIG. 5 shows a device that may interface with the network arrangement shown in FIG. 4 according to an implementation of the disclosed subject matter.

### DETAILED DESCRIPTION

Implementations of the disclosed subject matter may independently determine data of an energy utility. For example, systems and methods of the disclosed subject matter may determine a tariff assigned to a user by an energy utility and tariff options (i.e., tariff scenarios, as used throughout) given the user's location, electric bill date range, electric bill amount, and interval data (e.g., meter readings detailing energy usage). Implementations of the disclosed subject matter may determine the user's costs for one or more tariff scenarios based on the location of the user and/or the user's interval data. Each combination of the one or more tariff options and the one or more eligible tariffs may be a tariff scenario. The determined cost of each tariff scenario may be compared with the user's utility bill amount to determine the user's tariff scenario. Such data may be used by the energy utility in generating a utility bill for the user.

Implementations of the disclosed matter may determine a user's tariff scenario and other data, even when the user does not know it and/or the energy utility does not disclose it. Determining data related to an energy utility may be used to perform energy usage and/or cost analysis for the user's energy utility.

Current systems merely allow for a user to identify a tariff scenario from a list, and/or provide responses to one or more questions to identify a tariff scenario.

Implementations of the disclosed subject matter may determine a tariff scenario for a user when the user is unaware of their tariff scenario. While some utilities offer few tariff options, the number of tariffs and tariff options has increased greatly in the past decade. For example, Pacific Gas & Electric residential customers may have one of over 500,000 unique combinations of tariff and tariff options. As the complexity of a user's tariff choice increases, the ability to determine the user's tariff scenario and other data related to energy usage and billing has increased utility.

Implementations of the disclosed subject matter may be used to determine data for a user's tariff scenario. Although the data may be retrieved from the energy utility In many cases, the energy utility and/or bill issued to the user may not indicate the user's tariff (e.g., Arizona Public Service for Time of Use customers may not provide the tariff) or tariff options (e.g., Air Conditioning Cycling Credits for the Southern California Edison energy utility may not provide tariff options). In the absence of this information being provided by the energy utility, implementations of the disclosed subject matter may be used to determine data, such as the tariff scenario, energy usage, and/or other energy utility data.

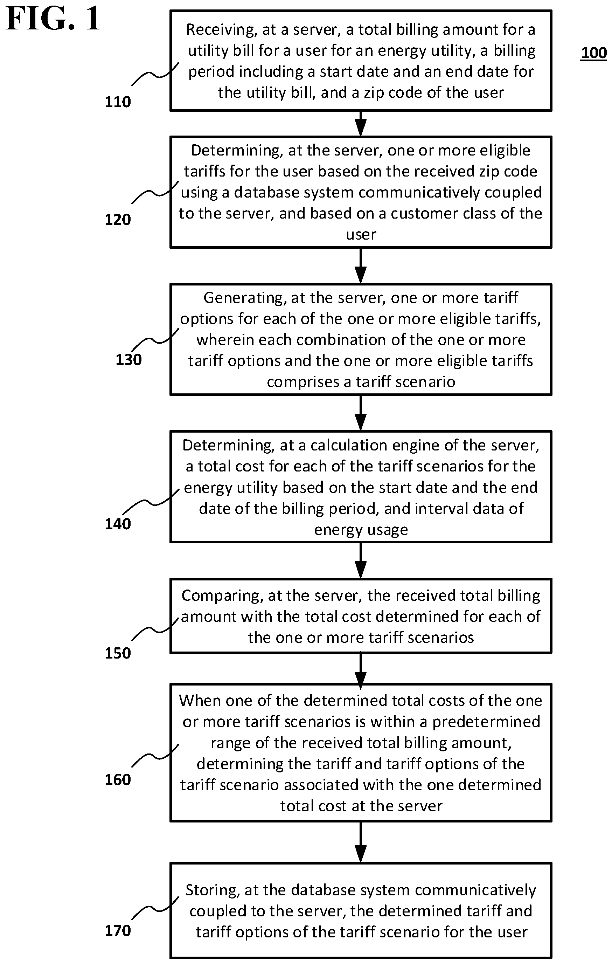

FIG. 1 shows an example method 100 of determining data accuracy of an energy utility, including accuracy of energy tariffs, according to an implementation of the disclosed subject matter.

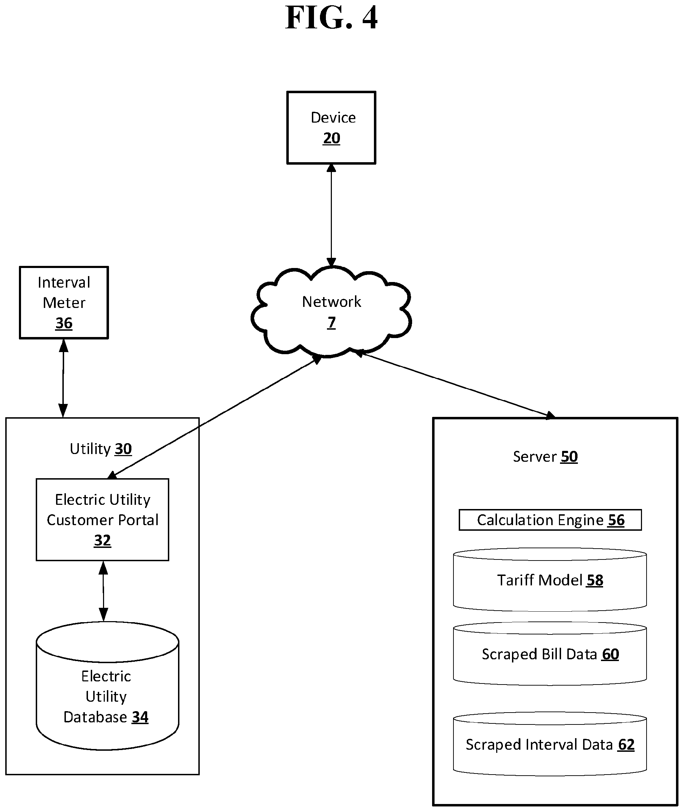

At operation 110, a server may receive a total billing amount for a utility bill for a user for an energy utility, a billing period including a start date and an end date for the utility bill, and a zip code of the user. The server may be server 50, shown in FIG. 4 and described below. The utility bill may be received by the server 50 from the electric utility customer portal 32 of the utility 30 via the communications network 7, as shown in FIG. 4. The utility bill may include a total amount (i.e., billing amount or cost) In some implementations, the utility bill may be received from customer device 20. The energy utility may be utility 30 shown in FIG. 4. The billing period (including the start date and the end date) and the zip code may be determined from the retrieved utility bill. In some implementations, the billing period and/or zip code may be retrieved by the server 50 from the electric utility customer portal 32 using login information of the user.

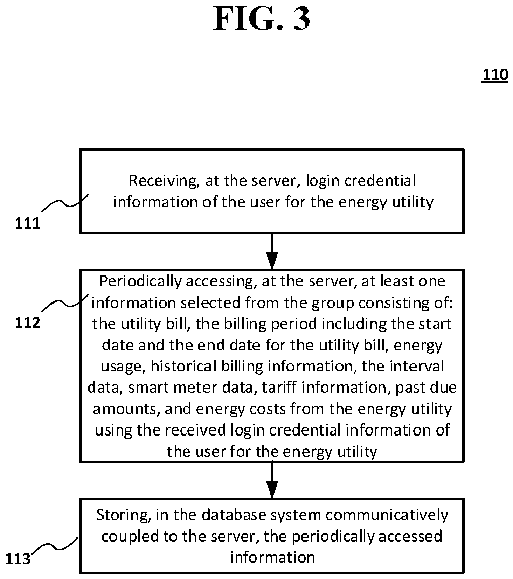

The receiving the total billing amount of the utility bill at operation 110 may optionally include the operations shown in FIG. 3. At operation 111, the server may receive login credential information of the user for the energy utility. For example, the server 50 may receive login credential information of the user (e.g., from the device 20 via the communications network 7) to access information with the electric utility customer portal 32 of utility 30. At operation 112, the server may periodically access the utility bill, the billing period including the start date and the end date for the utility bill, energy usage, historical billing information, the interval data, smart meter data, tariff information, past due amounts, energy costs, and/or other data from the energy utility using the received login credential information of the user for the energy utility. At operation 113, the server may store the periodically accessed information in the database system communicatively coupled to the server. For example, the periodically accessed information may be stored in tariff model 58, scraped bill data 60, and/or scraped interval data 62 as described below in connection with FIG. 4.

That is, in implementations of the disclosed subject matter, a user may share their utility login credentials with the electric utility customer portal 32 of utility 30 shown in FIG. 4 with the server 50. The server 50 may access materials that the utility 30 may publish via the electric utility customer portal 32, which may be retrieved and stored in tariff model 58, scraped bill data 60, and/or scraped interval data 62. For example, the server 50 may retrieve a summary of charges to the user by the energy utility 30, which may include one or more documents and/or data with the user's most recent bill and historical billing information, which may be stored in scraped bill data 60.

The server 50 may use the login credential information of the user to access the user's account with the utility 30 via the electric utility customer portal 32. The user's account data may be downloaded to the server 50, and may be stored in the scraped bill data 60. At least portions of the retrieved data may be normalized and stored (e.g., with the tariff model 58, scraped bill data 60 and/or the scraped interval data 62) for use in one or more applications.

For example, a user's bill may be retrieved by the server 50, along with interval data, the utility costs for the user, a past due amount, and the like, and may be stored with the scraped bill data 60 and/or the scraped interval data 62. When extracting and/or retrieving interval data, the server 50 may normalize the data for the Universal Time Zone before storing the data with the scraped interval data 62 so that the data is in a consistent format across utilities (e.g., utility 30 and other energy utilities). Data retrieval may be performed on a periodic basis to capture new utility bills and interval data as they become available at the electric utility customer portal 32 of the utility 30. In some implementations, the tariff assigned to the user may be retrieved by the server 50, and may be stored with the tariff model 58.

At operation 120, the server may determine one or more eligible tariffs for the user based on the received zip code using a database system communicatively coupled to the server, and based on a customer class of the user. The tariff may be a tariff rate amount for energy, and may be based on geographic territory, season, time of use, demand determination, optional programs, net metering policy, eligibility requirements for each tariff, or the like. The database system that stores the tariffs may be part of tariff model 58 shown in FIG. 4. The customer class may be a residential customer class, a commercial customer class, or the like. The eligible tariffs may differ for the residential customer class and the commercial customer class.

At operation 130, the server may generate one or more tariff options for each of the one or more eligible tariffs. Each combination of the one or more tariff options and the one or more eligible tariffs may be referred to as a tariff scenario.

At operation 140, a calculation engine of the server may determine a total cost for each of the tariff scenarios for the energy utility based on the start date and the end date of the billing period, and interval data of energy usage. The calculation engine may be hardware and/or software, and may be calculation engine 56 shown in FIG. 4 and described below.

In some implementations, the server may receive the interval data from the database system (e.g., scraped interval data 62 shown in FIG. 4) communicatively coupled to the server and/or from one or more meters (e.g., interval meter 36) of the user. In some implementations, the server may receive the interval data from the electric utility customer portal 32 of utility 30, where the utility 30 may have received the interval data from the interval meter 36. The received interval data may be stored by the server with scraped interval data 62.

In some implementations, the calculation engine (e.g., calculation engine 56) of the server may provide an application program interface (API) to calculate costs across a plurality of different energy utilities. Other companies, servers, and/or devices may access utility data of their users that may be stored with the tariff model 58, scraped bill data 60, and/or scraped interval data 62 using the API.

In some implementations, a call may be made via an applications program interface (API) that is provided by the server. The call may include one or more requests for utility cost calculation from the calculation engine (e.g., calculation engine 56). The call may include parameters such as interval data, a tariff scenario, the start date, the end date, and the like. For example, the API call may be used to return a calculation that may "mirror" the calculation performed by the energy utility for each tariff scenario passed.

At operation 150, the server may compare the received total billing amount with the total cost determined for each of the one or more tariff scenarios.

When one of the determined total costs of the one or more tariff scenarios is within a predetermined range of the received total billing amount, the server may determine the tariff and tariff options of the tariff scenario associated with the one determined total cost at operation 160. For example, the predetermined range may be less than or equal to 20%, 10%, 5%, 2%, 1%, 0.1%, 0.01%, or any other range of the received total billing amount. In some implementations, when it is determined that the determined total costs of the one or more tariff scenarios is within the predetermined range, the server may determine that the tariff scenario reflects the user's true tariff and/or tariff options.

At operation 170, the determined tariff and tariff options of the tariff scenario for the user may be stored in the that may be communicatively coupled to the server.

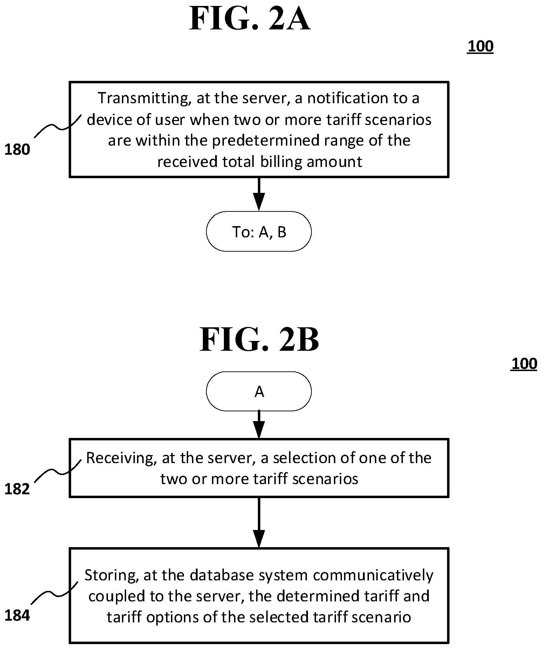

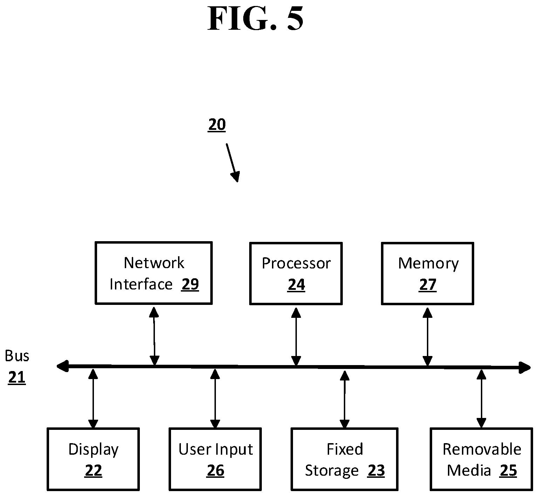

FIGS. 2A-3 show optional additional operations of the example method of FIG. 1 according to implementations of the disclosed subject matter. FIG. 2A shows operation 180, where the server may transmit a notification to a device of user when two or more tariff scenarios are within the predetermined range of the received total billing amount. For example, the notification may be transmitted via communications network 7 to device 20, and displayed on display 22 as shown in FIGS. 4 and 5. That is, when two when two or more tariff scenarios are within the predetermined range of the received total billing amount, the two or more tariff scenarios may be presented to the user to select one of the tariff scenarios, as shown in FIG. 2B and described below.

In FIG. 2B, the server may receive a selection of one of the two or more tariff scenarios at operation 182. The server may receive the selection from device 20 via the communications network 7. The device 20 may receive the selections from the user, via the user input 26. The database system (e.g., tariff model 58 shown in FIG. 4) may store the determined tariff and tariff options of the selected tariff scenario at operation 184.

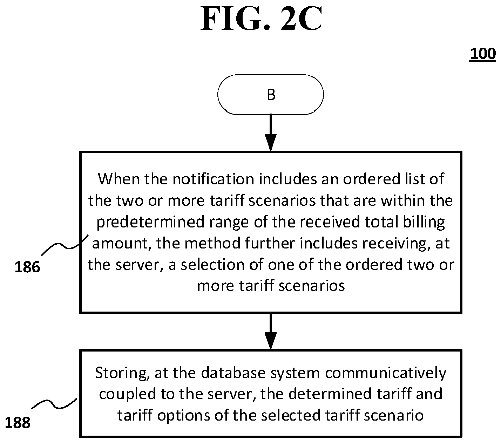

The operation of FIG. 2C may be performed after operation 180 in FIG. 2A, when the notification includes an ordered list of the two or more tariff scenarios that are within the predetermined range of the received total billing amount. At operation 186 shown in FIG. 2C, the server may receive a selection of one of the ordered two or more tariff scenarios. At operation 188, the database system (e.g., tariff model 58 shown in FIG. 4) communicatively coupled to the server may store the determined tariff and tariff options of the selected tariff scenario. In some implementations, the list of the two or more tariff scenarios may be ordered based on a match percentage to the received total billing amount. In some implementations, the list of the two or more tariff scenarios is ordered based on a tariff scenario calculation total.

FIG. 4 shows a network arrangement of energy generating systems, servers, databases, and/or devices according to an implementation of the disclosed subject matter. A utility 30 (i.e., an electric utility) may generate electricity to be provided to one or more customers via a power grid. The utility 30 may include a server that provides an electric utility customer portal 32, which may allow customers to access account information with the utility 30. Account information may include, for example, utility bills, payment information, amount of energy used, address and contact information, and the like. The server of the utility 30 may be one or more hardware servers and or a cloud server. The server of the utility 30 that provides the electric utility customer portal 32 may be communicatively coupled to an electric utility database 34, which may store, among other things, historic utility bill statements for one or more customers, interval data, tariff data, and the like. The utility 30 may be communicatively coupled to a server 50 via communications network 7.

The server 50 may be one or more hardware servers, a cloud server, or the like which may include and/or be communicatively coupled to calculation engine 56, tariff model 58, scraped bill data 60, and/or scraped interval data 62.

Calculation engine 56 may be hardware and/or software which may determine data of an energy utility as discussed above in connection with FIGS. 1-3. Tariff model 58 may be hardware, software, and/or a database that may include a tariff (i.e., a tariff rate), and/or rules for application of the tariff. In some implementations, the calculation engine 56 may determine a model bill, which may "mirror" the calculation of the utility bill by the utility 30. For example, tariff model 58 may be may be used by the calculation engine 56 to determine the model bill based on tariff data, a start date of the date range, an end date of the date range, available interval data, and/or an energy usage.

Scraped bill data 60 may be hardware, software, and/or a database that may include one or more hardware storage devices that may store tariffs, start dates and end dates of date ranges, billing information, energy usage data, other data, and the like. Scraped interval data 62 may be hardware, software, and/or a database that may include one or more hardware storage devices that may store interval data that may be scraped from a utility bill, the interval meter 36, or the like.

The utility 30, the server 50, and a device 20 (described below in connection with FIG. 5) may be communicatively connected via communications network 7. The network 7 may be a local network, wide-area network, the Internet, or any other suitable communication network or networks, and may be implemented on any suitable platform including wired and/or wireless networks.

Embodiments of the presently disclosed subject matter may be implemented in and used with a variety of component and network architectures. FIG. 5 is an example device 20 that may a desktop or laptop computer, or a mobile computing device such as a smart phone, tablet, or the like. In some implementations, the device 20 may be used to manage an account with the utility 30, receive notifications and/or determined data information from the server 50, or the like. The device 20 may include a bus 21 which interconnects major components of the device 20, such as a central processor 24, a memory 27 such as Random Access Memory (RAM), Read Only Memory (ROM), flash RAM, or the like, a user display 22 such as a display screen, a user input interface 26, which may include one or more controllers and associated user input devices such as a keyboard, mouse, touch screen, and the like, a fixed storage 23 such as a hard drive, flash storage, and the like, a removable media component 25 operative to control and receive an optical disk, flash drive, and the like, and a network interface 29 operable to communicate with one or more remote devices via a suitable network connection.

The bus 21 allows data communication between the central processor 24 and one or more memory components, which may include RAM, ROM, and other memory, as previously noted. Typically, RAM is the main memory into which an operating system and application programs are loaded. A ROM or flash memory component can contain, among other code, the Basic Input-Output system (BIOS) which controls basic hardware operation such as the interaction with peripheral components. Applications resident with the device 20 are generally stored on and accessed via a computer readable medium, such as a hard disk drive (e.g., fixed storage 23), an optical drive, floppy disk, or other storage medium.

The fixed storage 23 may be integral with the device 20 or may be separate and accessed through other interfaces. The network interface 29 may provide a direct connection to a remote server via a wired or wireless connection. The network interface 29 may provide such connection using any suitable technique and protocol as will be readily understood by one of skill in the art, including digital cellular telephone, WiFi, Bluetooth(R), near-field, and the like. For example, the network interface 29 may allow the computer to communicate with other computers via one or more local, wide-area, or other communication networks, as described in further detail below.

Many other devices or components (not shown) may be connected in a similar manner (e.g., sensors, energy use monitors, and the like). Conversely, all of the components shown in FIG. 15 need not be present to practice the present disclosure. The components can be interconnected in different ways from that shown. The operation of the device 20 such as that shown in FIG. 15 is readily known in the art and is not discussed in detail in this application. Code to implement the present disclosure can be stored in computer-readable storage media such as one or more of the memory 27, fixed storage 23, removable media 25, or on a remote storage location.

More generally, various implementations of the presently disclosed subject matter may include or be embodied in the form of computer-implemented processes and apparatuses for practicing those processes. Implementations also may be embodied in the form of a computer program product having computer program code containing instructions embodied in non-transitory and/or tangible media, such as floppy diskettes, CD-ROMs, hard drives, USB (universal serial bus) drives, or any other machine readable storage medium, such that when the computer program code is loaded into and executed by a computer, the computer becomes an apparatus for practicing implementations of the disclosed subject matter. Implementations also may be embodied in the form of computer program code, for example, whether stored in a storage medium, loaded into and/or executed by a computer, or transmitted over some transmission medium, such as over electrical wiring or cabling, through fiber optics, or via electromagnetic radiation, such that when the computer program code is loaded into and executed by a computer, the computer becomes an apparatus for practicing implementations of the disclosed subject matter. When implemented on a general-purpose microprocessor, the computer program code segments configure the microprocessor to create specific logic circuits.

In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Implementations may be implemented using hardware that may include a processor, such as a general purpose microprocessor and/or an Application Specific Integrated Circuit (ASIC) that embodies all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A method comprising:
receiving, at a server, a total billing amount for a utility bill for a user for an energy utility, a billing period including a start date and an end date for the utility bill, and a zip code of the user;
determining, at the server, one or more eligible tariffs for the user based on the received zip code using a database system communicatively coupled to the server, and based on a customer class of the user;
generating, at the server, one or more tariff options for each of the one or more eligible tariffs, wherein each combination of the one or more tariff options and the one or more eligible tariffs comprises a tariff scenario;
determining, at a calculation engine of the server, a total cost for each of the tariff scenarios for the energy utility based on the start date and the end date of the billing period, and interval data of energy usage;
comparing, at the server, the received total billing amount with the total cost determined for each of the one or more tariff scenarios;
when one of the determined total costs of the one or more tariff scenarios is within a predetermined range of the received total billing amount, determining the tariff and tariff options of the tariff scenario associated with the one determined total cost at the server; and
storing, at the database system communicatively coupled to the server, the determined tariff and tariff options of the tariff scenario for the user.

2. The method of claim 1, wherein the predetermined range is less than or equal to at least one selected from the group consisting of: 20%, 10%, 5%, 2%, 1%, 0.1%, and 0.01% of the received total billing amount.

3. The method of any preceding claim, further comprising:
transmitting, at the server, a notification to a device of user when two or more tariff scenarios are within the predetermined range of the received total billing amount.

4. The method of claim 3, further comprising:
receiving, at the server, a selection of one of the two or more tariff scenarios; and
storing, at the database system communicatively coupled to the server, the determined tariff and tariff options of the selected tariff scenario.

5. The method of claim 3, wherein when the notification includes an ordered list of the two or more tariff scenarios that are within the predetermined range of the received total billing amount, the method further comprising:
receiving, at the server, a selection of one of the ordered two or more tariff scenarios; and
storing, at the database system communicatively coupled to the server, the determined tariff and tariff options of the selected tariff scenario.

6. The method of claim 5, wherein the list of the two or more tariff scenarios is ordered based on a match percentage to the received total billing amount.

7. The method of claim 5, wherein the list of the two or more tariff scenarios is ordered based on a tariff scenario calculation total.

8. The method of any preceding claim, wherein the customer class comprises at least one selected from the group consisting of: a residential customer class, and a commercial customer class,
wherein the eligible tariffs differ for the residential customer class and the commercial customer class.

9. The method of any preceding claim, further comprising:
receiving, at the server, the interval data from the database system communicatively coupled to the server.

10. The method of any one of claims 1 to 8, further comprising:
receiving, at the server, the interval data from one or more meters of the user.

11. The method of any preceding claim, wherein the receiving the total billing amount of the utility bill comprises:
receiving, at the server, login credential information of the user for the energy utility;
periodically accessing, at the server, at least one information selected from the group consisting of: the utility bill, the billing period including the start date and the end date for the utility bill, energy usage, historical billing information, the interval data, smart meter data, tariff information, past due amounts, and energy costs from the energy utility using the received login credential information of the user for the energy utility; and
storing, in the database system communicatively coupled to the server, the periodically accessed information.
